# EUROPEAN PATENT APPLICATION

(11) **EP 4 090 101 A1**
(43) Date of publication of application: **16.11.2022**
(21) Application number: 20911375.2
(22) Date of filing: 08.01.2020
(51) Int. Cl.: H04W 72/04, H04W 88/04

(54) **WIRELESS COMMUNICATION DEVICE AND WIRELESS COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); KUMAGAI, Shinya, Tokyo 100-6150 (JP); NAGATA, Satoshi, Tokyo 100-6150 (JP)
(74) Representative: Hoffmann Eitle
(86) International application number: PCT/JP2020/000349
(87) International publication number: WO 2021/140595

(57) **Abstract**

A radio communication apparatus according to one aspect of the present disclosure includes: a reception section that receives from a base station a notification for using a plurality of cells for a terminal; and a control section that communicates, based on the notification, with at least one terminal by using at least one cell of the plurality of cells.

## Description

### Technical Field

The present disclosure relates to a radio communication apparatus and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (Third Generation Partnership Project (3GPP) Releases (Rel.) 8 and 9), LTE-Advanced (3GPP Rel. 10 to 14) has been specified.

LTE successor systems (also referred to as, for example, the 5th generation mobile communication system (5G), 5G+ (plus), New Radio (NR), New radio access (NX), Future generation radio access (FX) or 3GPP Rel. 15 or subsequent releases) are also studied.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

The future radio communication system (e.g., 5G or NR) assumes a plurality of communications (also referred to as, for example, use cases, services or communication types) of different requirements (communication requirements) such as a high speed and a large capacity (e.g., eMBB: enhanced Mobile Broad Band), massive terminals (e.g., mMTC: massive Machine Type Communication), and ultra reliability and low latency (e.g., URLLC: Ultra Reliable and Low Latency Communications). In addition, the requirement only needs to relate to at least one of, for example, latency, reliability, capacity, a speed and performance.

It is thought that multiple base stations are installed in the future radio communication system to provide cells that support each of different services or requirements.

However, in a case where the multiple base stations are installed, there is a risk that connections between base stations, base station facilities or installation positions also increase and cost for providing a network increases.

It is therefore one of objects of the present disclosure to provide a radio communication apparatus and a radio communication method that can realize providing a network at low cost.

### Solution to Problem

A radio communication apparatus according to one aspect of the present disclosure includes: a reception section that receives from a base station a notification for using a plurality of cells for a terminal; and a control section that communicates, based on the notification, with at least one terminal by using at least one cell of the plurality of cells.

### Advantageous Effects of Invention

According to one aspect of the present disclosure, it is possible to realize providing a network at low cost.

### Brief Description of Drawings

Fig. 1 is a diagram illustrating one example of a case where base stations are installed according to services or requirement conditions.
Fig. 2 is a diagram illustrating one example of a network in a case where C-UEs are introduced.
Fig. 3 is a diagram illustrating one example of notification of a C-PCell from the C-UE to an M-UE.
Fig. 4 is a diagram illustrating one example where the C-UE determines the C-PCell.
Fig. 5 is a diagram illustrating one example where the C-UE activates a C-SCell.
Fig. 6 is a diagram illustrating one example of a cell configuration per M-UE.
Fig. 7 is a diagram illustrating one example of a schematic configuration of a radio communication system according to one embodiment.
Fig. 8 is a diagram illustrating one example of a configuration of a base station according to the one embodiment.
Fig. 9 is a diagram illustrating one example of a configuration of a user terminal according to the one embodiment.
Fig. 10 is a diagram illustrating one example of hardware configurations of the base station and the user terminal according to the one embodiment.

### Description of Embodiments

### <Network Design>

According to a current (e.g., Rel. 15) Network design (NW design), a first base station (LTE eNB) that provides LTE communication and a second base station (NR gNB) that provides NR communication each form a cell, and communicate with a terminal (also referred to as the UE below) in the cell.

The first base station may control communication with the UE by using a given frequency range (at least one of, for example, 700 MHz, 800 MHz, 1.5 GHz, 1.8 GHz, 2.1 GHz and 3.5 GHz). The second base station may control communication with the UE by using another frequency range (at least one of, for example, 3.7 GHz, 4.5 GHz and 28 GHz).

Each base station may be connected with a core network directly (or via another base station). The core network may include at least one of, for example, an Evolved Packet Core (EPC), a 5G Core Network (5GCN) and a Next Generation Core (NGC). Furthermore, the core network may be connected with an external network such as the Internet. The UE may be a terminal that supports at least one of communication schemes such as LTE, LTE-A and 5G.

A Network operator (NW operator) provides communication by installing the first base stations and the second base stations everywhere.

Future radio communication systems assume providing services such as machine type communications (e.g., massive Machine Type Communications (mMTC)) that realize multiple simultaneous connection, and Device to Device (D2D) where terminals directly communicate without base stations.

Furthermore, the future radio communication systems assume traffic types (also referred to as, for example, service types, communication types and use cases) such as higher sophistication of a mobile broadband (e.g., enhanced Mobile Broadband (eMBB)), and highly reliable and low latency communications (e.g., Ultra-Reliable and Low-Latency Communications (URLLC)). For example, URLLC is requested to realize less latency and more ultra reliability than those of eMBB.

Furthermore, it is also assumed for a specific traffic type (e.g., URLLC) that requirement conditions requested by services to provide (e.g., gaming and X Reality (XR such as Virtual Reality (VR), Augmented Reality (AR), Mixed Reality (MR) and Substitutional Reality (SR))) are different.

Furthermore, the future radio communication systems assume to perform communication by using a higher frequency range. For example, a frequency range above 52.6 GHz (FR 4) may be used. Furthermore, there is also a probability that the future radio communication system is demanded to more quickly provide an NW that satisfies a user's request in response to the user's request.

In a case where the current NW design (e.g., installation of base stations according to a service or a communication request) is used as is, it is supposed to install multiple base stations to provide cells that respectively support different services or communication requirements.

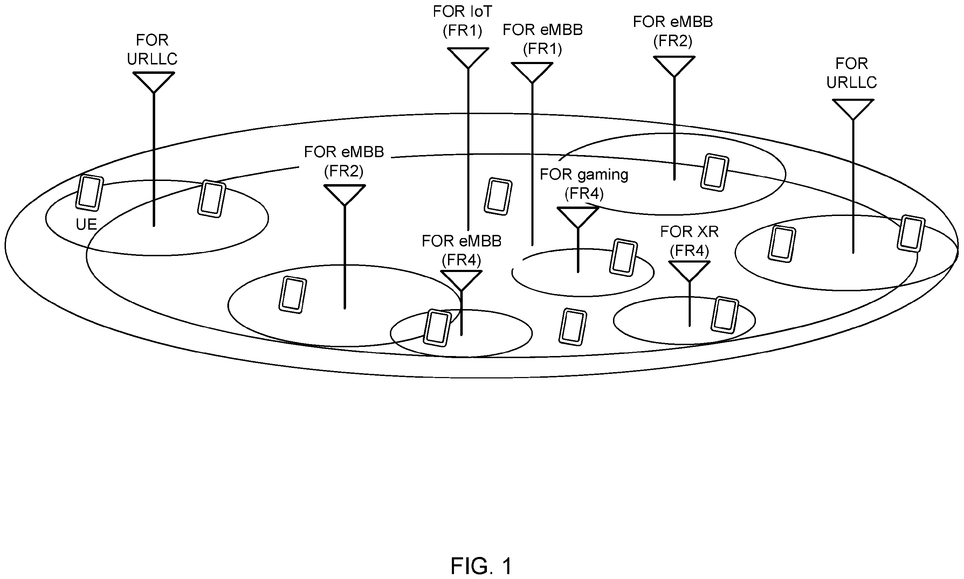

Fig. 1 is a diagram illustrating one example of a case where base stations are installed according to different services or communication requests. In a case where the multiple base stations are installed as illustrated in Fig. 1, there is a risk that connections between base stations, base station facilities or installation positions also increase, the number of people who are necessary for the installation also increases, and therefore cost for providing a network increases.

Hence, a configuration where a radio communication apparatus (e.g., UE) that has a terminal function has a base station function is studied.

The UE that has the base station function (e.g., at least part of the base station function) may be referred to as a Captain UE (C-UE). In addition, a UE that has the base station function and is performing the base station function may be referred to as the C-UE. The C-UE may provide the base station function to another UE based on an indication from the base station or without the indication from the base station. The C-UE may adopt a mode similar to that of an access point of a wireless LAN.

It is supposed that the C-UE uses a plurality of cells. However, how the C-UE performs Carrier Aggregation (CA) control matters. In a case where, for example, the C-UE is permitted to use a plurality of Component Carriers (CCs) (in a case where the C-UE is configured by the base station to use a plurality of CCs), how to use these CCs is not clear. For example, a C-UE's operation of controlling use of a plurality of CCs for a UE (Member UE (M-UE) that is controlled by a given C-UE is not clear.

Unless CA control of the C-UE is clear, there is a risk that, for example, a throughput is restricted, that is, system performance is restricted.

The inventors of the present disclosure have conceived a method where a radio communication apparatus that has a terminal function appropriately controls CA.

An embodiment according to the present disclosure will be described in detail below with reference to the drawings. A configuration described in each embodiment may be each applied alone or may be applied in combination. In addition, communication systems to which the present embodiment is applicable are not limited. In the present disclosure, transmission/reception may mean at least one of transmission and reception. In the present disclosure, transmission/reception, transmission, reception, and transmission and reception may be interchangeably read.

In the present disclosure, CA and dual connectivity may be interchangeably read.

In the present disclosure, a UE that has the base station function, a UE that supports the base station function, a UE that is performing the base station function, a C-UE, a special UE, a specific UE, a radio communication apparatus, an access point, a mobile station, a fixed station and a relay apparatus may interchangeably read.

In the present disclosure, a UE that does not have the base station function, a UE that does not support the base station function, a UE that is not performing the base station function, another UE, a normal UE, a Member UE (M-UE), a non-C-UE, a non-special UE and a non-specific UE may be interchangeably read.

### (Radio Communication Method)

In the present embodiment, notification (configuration or indication) from the base station to the CUE may use at least one of a Physical (PHY or PHY layer) signaling, a Medium Access Control (MAC) (MAC layer (protocol)) signaling and a Radio Resource Control (RRC) (RRC layer (protocol)) signaling. In the present embodiment, notification (configuration or indication) from the C-UE to the M-UE may use at least one of the PHY, MAC and RRC signalings. The PHY signaling may be at least one of, for example, a field in DCI, a DCI format, a Control Resource Set (CORESET), a search space and a Radio Network Temporary Identifier (RNTI) for scrambling a Cyclic Redundancy Check (CRC) of DCI. The MAC signaling may be, for example, an MAC Control Element (CE). The RRC signaling may be, for example, an RRC parameter (Information Element (IE)).

In a case where the C-UE is configured with a plurality of cells for the base station function by the base station, the C-UE may configure a cell to the M-UE. A cell used for communication between the CUE and the M-UE may be referred to as a C cell (such as a C-Cell, a local cell or a local area cell).

In a case where a plurality of C cells for communication between the C-UE and the M-UE are configured, a plurality of C cells may be classified into a Primary Cell (PCell) and a Secondary Cell (SCell).

At least one C cell may include one Captain (C)-PCell (such as a CPCell or a PCCell). The C-PCell may be a cell to which a specific signal is transmitted. The specific signal may be at least one of a Synchronization Signal (SS), an SS/Physical Broadcast Channel (PBCH) block, a Physical Random Access Channel (PRACH), a Physical Uplink Control Channel (PUCCH), a Physical Sidelink Feedback Channel (PSFCH) and fallback scheduling (e.g., Downlink Control Information (DCI) format 0_0 or 0_1).

In a case where a plurality of C cells are used, a plurality of C cells may include at least one Captain (C)-SCell (such as a CSCell or an SCCell). The C-SCell may be a cell other than the C-PCell among a plurality of C cells. Among cells that the C-UE can use, the C-SCell may be a cell that is usable in addition to the C-PCell.

The C cells that the C-UE can use (cells that can be used between the C-UE and the M-UE) may be different from cells that the base station can use (cells that can be used between the base station and the CUE), may be the same, or may be partially the same.

A service type or a priority (a service priority, a traffic priority or a traffic type) supported by each cell may be configured by at least one of PHY, MAC and RRC signalings. The service type, the service priority and the traffic type may correspond to communication of different requirements such as eMBB, mMTC and URLLC. The service type or the service priority used by the M-UE may be configured by at least one of PHY, MAC and RRC signalings, or may be reported from the M-UE. The service type or the service priority of communication contents may be determined based on information of an application layer, or may be determined by a higher layer (e.g., an RRC layer or an MAC layer), yet is not limited to these.

### <Configuration>

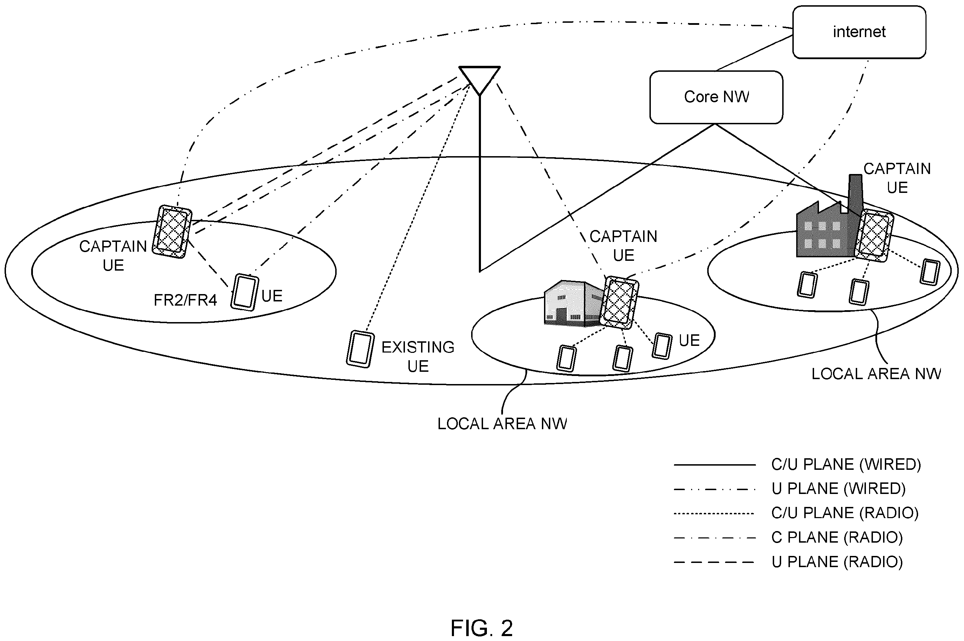

Fig. 2 is a diagram illustrating one example of a configuration where at least part of the base station function is given to a specific terminal.

The C-UE may be configured to communicate with the base station similar to the M-UE. For example, at least one of user data (U plane) and a control signal (C plane) may be transmitted and received by radio between the C-UE and the base station.

Furthermore, the C-UE may be connected with at least one of the core network and the external network (e.g., Internet) by using at least one of wired connection and radio connection. Furthermore, at least one of user data (U plane) and a control signal (C plane) may be transmitted and received by radio between the C-UE and the M-UE. For example, between the C-UE and the M-UE, only the U plane may be transmitted and received by radio, or both of the U plane and the C plane may be transmitted and received by radio.

The C-UE may control whether or not to apply the base station function (e.g., execution/stop, enable/disable or activation/deactivation) based on a notification from the network (e.g., base station). The notification from the network may use at least one of a higher layer signaling and downlink control information. Furthermore, based on the notification from the network or a given condition, the C-UE may decide the base station function to be applied.

In this regard, in a case where a specific condition is satisfied, whether or not to apply the base station function may be controlled even when there is no notification from the network. For example, the specific condition may be that emergency information (on, for example, a disaster) is received from other than the network.

Furthermore, the C-UE may control whether or not to apply the base station function by a timer. Timer control (e.g., a start timing or an expiration timing) may be defined in advance by a specification, or may be configured by the network (e.g., base station).

The C-UE may form an area for providing a specific service by using a specific radio resource. The radio resource may be a frequency resource, may be a time resource, or may be a combination of the frequency resource and the time resource.

Information related to the specific radio resource may be defined in advance by the specification, or may be notified to the C-UE and the M-UE by the network (e.g., base station) by, for example, a higher layer signaling. Alternatively, the C-UE may notify the M-UE of the information related to the specific radio resource.

The M-UE may control transmission/reception of the specific radio resource or the specific service based on an indication of the C-UE. On the other hand, the M-UE may control transmission/reception of another radio resource or another service based on an indication of the base station.

The C-UE may control at least one of transmission and reception (that will be described as transmission/reception below) of the M-UE. For example, the C-UE may control at least one of following M-UE operations.
M-UE operation 1: A case where the M-UE transmits and receives data to and from the base station via the C-UE by radio
M-UE operation 2: A case where the M-UE transmits and receives data to and from the base station without the C-UE by radio
M-UE operation 3: A case where the M-UE transmits and receives data via the C-UE by wire M-UE operation 4: A case where the M-UEs directly communicate with each other

In addition, data may be read as at least one of a UL-SCH, a DL-SCH, an SL-SCH, a PUSCH, a PDSCH and a PSSCH.

The C-UE may receive, from the network (e.g., base station), information (e.g., an identifier of the M-UE) related to the M-UE that performs control by using the base station function. Alternatively, the CUE may decide the M-UE that performs control that uses the base station function based on a reception status of a signal or data transmitted from the M-UE.

### <M-UE Operation>

When the M-UE is connected with the C-UE, the M-UE may control communication based on an indication of the C-UE. On the other hand, when the M-UE is not connected with the C-UE, the M-UE may control communication based on an indication of the base station.

The M-UE may receive information related to the C-UE (e.g., information of the C-UE to connect with) from the base station by at least one of a higher layer signaling and downlink control information. Alternatively, the M-UE may decide the C-UE to connect with based on a given signal transmitted from the C-UE. The number of C-UEs that the M-UE is connected with may be limited to one, or may be plural.

When receiving an indication from the base station, the M-UE connected with the C-UE may prioritize the indication of one of the C-UE and the base station, and ignore (or drop) the other indication. Which one of the indication from the C-UE and the indication from the base station to prioritize may be defined in advance by the specification, or may be notified from the network (e.g., base station) to the M-UE (and the C-UE).

Alternatively, the M-UE may determine which one of the indication from the C-UE and the indication from the base station to prioritize, based on an indicated information category or information type. A priority of the information type (information type priority) may be defined in advance by the specification, or may be notified from the network (e.g., base station) to the M-UE (and C-UE) by at least one of PHY, MAC and RRC signalings.

Each UE may report whether or not each UE has the base station function (or whether or not each UE can function as the C-UE) to the network (e.g., base station). Furthermore, the UE that has the base station function may report contents (e.g., a layer and a function level) of the embodied base station function. Furthermore, the M-UE may report whether or not the M-UE supports communication with the C-UE (whether or not it is possible to perform transmission and reception between the C-UE and the M-UE) to the network (e.g., base station).

### <Base Station Function>

The base station function that the C-UE has only needs to be a function related to communication control of the M-UE. For example, the base station functions may be at least one of followings.

### [Function of Physical (PHY) Layer]

The C-UE may perform at least one of transmission of broadcast information (or system information), reception of a random access channel, and transmission of a random access response.

When, for example, receiving a random access preamble (e.g., PRACH) transmitted from the M-UE, the C-UE may control a random access procedure (a message 2 or subsequent messages) of the M-UE. In this case, the C-UE may control the random access procedure via the base station.

### [Function of MAC Layer]

The C-UE may perform at least one of multiplexing (or mapping) of a logical channel, HARQ retransmission control, scheduling of at least one of DL, UL and SL, and multiplexing/demultiplexing of data over a plurality of cells (or CCs).

### [Function of Radio Link Control (RLC) Layer]

The C-UE may perform at least one of data segmentation, data concatenation, retransmission control, overlapping data detection, and order preserving broadcast to a higher layer.

### [Function of Packet Data Convergence Protocol (PDCP) Layer]

The C-UE may perform at least one of encryption, decryption, order preserving broadcast, removal of overlapping data during handover, and duplication of a PDCP packet.

### [Function of RRC Layer/Service Data Adaptation Protocol (SDAP) Layer]

The C-UE may perform at least one of determination of an RRC parameter, providing of the RRC parameter, RRC connection management, cell selection, cell reselection, configuration of higher layer measurement, handling of UE capability, and transmission of a paging message.

The C-UE may change the base station function to support according to a state of the C-UE (or a communication state or a communication method). The state of the C-UE may be a state of the C-UE during transmission/reception of the data to and from the M-UE such as a role or an operation method performed by the C-UE.

When the state of the C-UE is in a first state, the C-UE may support a first base station function and, when the state of the C-UE is in a second state, the C-UE may support a second base station function.

A function of a distributed node (DU) in a legacy system (e.g., Rel. 15) may be executed by the CUE. Functions of an aggregate node (CU) and a distributed node (DU) in a legacy system (e.g., Rel. 15) may be executed by the C-UE.

The base station function that the C-UE applies or supports may be indicated by the network (or the base station). In this case, the base station may notify the M-UE of at least one of information related to the C-UE to connect with, information related to the base station function supported by the C-UE, and activation and deactivation of connection with the C-UE.

The C-UE may control cell configuration for the M-UE based on a specific rule (a criterion, a condition or a procedure).

The C-UE may receive a notification (a configuration or an indication) from the base station for using at least one cell for the M-UE. The C-UE may control CA between the C-UE and the M-UE based on this notification. The notification from the base station may be a configuration or an indication of a C-UE operation, or may be a configuration or an indication of at least one cell that can be used between the C-UE and the M-UE. The at least one cell used between the C-UE and the M-UE may be a cell configured or indicated by the base station, may be specified in the specification, may be a cell specified in the specification among a plurality of cells used between the base station and the C-UE, or a cell configured or indicated by the base station among a plurality of cells used between the base station and the C-UE.

The C-UE may determine at least one cell that is used for CA between the C-UE and the M-UE among a plurality of cells that can be used for CA between the C-UE and the M-UE.

### <C-PCell Notification Method>

The C-UE may implicitly or explicitly notify the M-UE of the C-PCell.

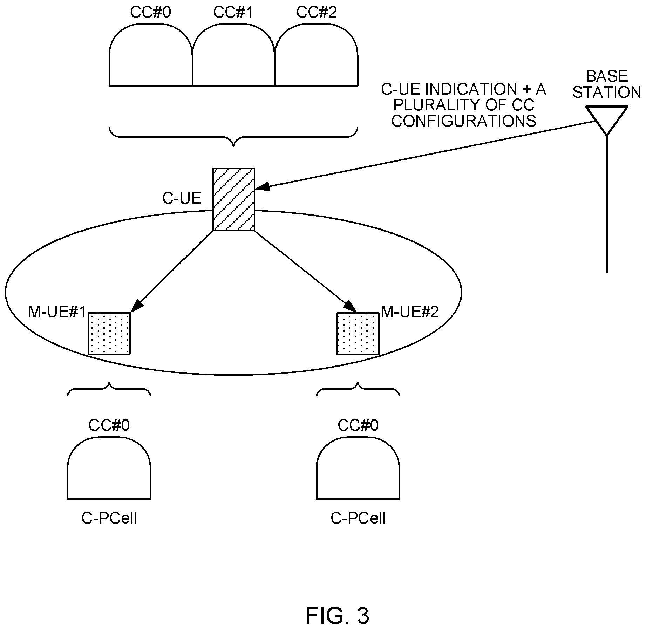

Fig. 3 is a diagram illustrating one example of notification of the C-PCell from the C-UE to the M-UE. In this example, the C-UE configures a CC #0 as the C-PCell to M-UEs #1 and #2.

The C-UE may implicitly perform notification of the C-PCell by transmitting an SS or an SS/PBCH block in the C-PCell.

The C-UE may explicitly perform notification of the C-PCell by at least one of PHY, MAC and RRC signalings.

### <C-SCell Notification Method>

The C-UE may implicitly or explicitly notify the M-UE of the C-SCell.

The C-UE may explicitly perform notification of activation or deactivation of the C-SCell by at least one of PHY, MAC and RRC signalings.

At least one of the C-UE and the M-UE may receive from the base station an indication that indicates activation or deactivation of the C-SCell. This indication may be a common indication received by both of the C-UE and the M-UE. When receiving the indication that indicates activation or deactivation of the C-SCell, at least one of the C-UE and the M-UE may assume that the C-SCell is activated or deactivated.

According to this aspect, the M-UE can appropriately recognize a cell that is used to communicate with the C-UE.

### <C-PCell Determination Rule>

The C-UE may determine the C-PCell from a plurality of cells configured by the base station.

The C-UE may determine the C-PCell based on a C-PCell determination rule among a plurality of configured cells. The C-PCell determination rule and a C-PCell condition may be interchangeably read.

The C-PCell determination rule may be that a cell has a specific state. The specific state may be information that is configured to a cell. The specific state may be a lowest index (e.g., a cell index or a serving cell index), or may be a specific index (e.g., 0).

The C-PCell determination rule may be configured by the base station. The C-UE may determine the C-PCell based on the configuration performed by the base station. The C-UE may be configured with information that indicates a C-PCell (e.g., a cell index or a serving cell index).

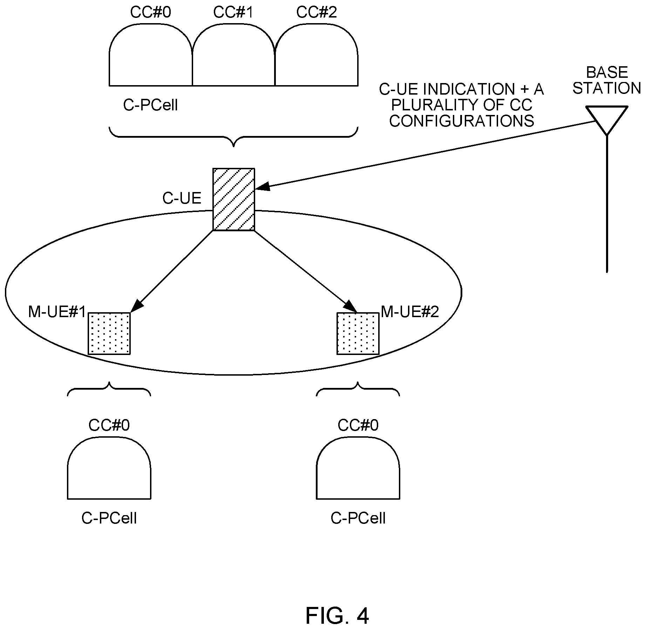

Fig. 4 is a diagram illustrating one example where the C-UE determines the C-PCell. In this example, the C-UE determines the CC #0 among a plurality of configured CCs as the C-PCell.

The C-PCell determination rule may be based on information of the M-UE. The C-UE may determine the C-PCell based on the information of the M-UE. The C-UE may receive from the M-UE a report from the M-UE. The report may be at least one of a measurement result (at least one of, for example, a Channel State Information (CSI) report, a Received Signal Strength Indicator (RSSI), Reference Signal Received Power (RSRP), Reference Signal Received Quality (RSRQ), a signal-to-noise and interference ratio and a Signal-to-Interference and Noise Ratio (SINR)), a Buffer Status Report (BSR), a UE type, a UE category, UE capability, and a service type or a service priority. The C-PCell determination rule may be one of following conditions, or may be a combination of a plurality of the following conditions.
- A measurement result of a cell obtained by the M-UE. A condition may be that the measurement result of the cell satisfies a measurement result condition. The measurement result condition may be a maximum value (best value) among measurement results of usable cell.
- Usable resources of a cell. A condition may be that the cell satisfies a buffer size condition. The buffer size condition may be that a cell resource is a buffer size or more indicated by a BSR from the M-UE, may be that a cell resource is a buffer size threshold or more, or may be that a cell resource is maximum.
- A service type or a service priority supported by a cell. A condition may be that the cell supports the service type or the service priority used for the M-UE. When, for example, a cell that supports eMBB and a cell that supports URLLC are usable, and the M-UE uses URLLC, the C-UE may determine the cell that supports URLLC as the C-PCell.
- A band, a band combination or a Frequency Range (FR) that is configurable to the M-UE. The C-UE may determine the C-PCell based on the band, the band combination or the FR that is configurable to the M-UE. A condition of the C-PCell may be that a cell is in the band, the band combination or the FR that is configurable to the M-UE. The band, the band combination or the FR that is configurable to the M-UE may be associated with a UE type, a UE category or UE capability of the M-UE.
- UE Capability of the M-UE. The C-UE may determine the C-PCell based on the UE capability of the M-UE. The UE capability may be a maximum number of usable cells.
- A connection status of the M-UE. The C-UE may determine the C-PCell based on the connection status of the M-UE. The connection status may be whether or not the M-UE is connected with another C-UE, or may be whether or not the M-UE is connected with the base station.

The C-PCell determination rule may be based on information of a cell. The C-UE may determine the C-PCell based on the information of each cell. The C-PCell determination rule may be one of following conditions, or may be a combination of a plurality of the following conditions. • The number of PRBs of a cell. For example, the cell has a maximum number of PRBs.
- An uplink/downlink TDD configuration (e.g., TDD-UL-DL-Config) of a cell. For example, the cell has a maximum UL duration (a slot or a symbol).
- A service type or a service priority supported by a cell. For example, the cell supports a specific service type or service priority.
- A cell usage rate. For example, a cell has a lowest cell usage rate.
- The number of connected M-UEs of a cell. For example, the number of connected M-UEs of a cell is less than a threshold K.

The C-PCell determination rule may be determined by one of following methods, or may be determined by a combination of a plurality of the following methods.
- The C-PCell determination rule is defined in the specification.
- The C-PCell determination rule is configured or indicated by at least one of PHY, MAC and RRC signalings from the base station.
- The C-PCell determination rule is determined (switched) based on a specific rule.
- The C-PCell determination rule depends on a UE implementation.

### <C-SCell Activation/Deactivation Determination Rule>

The C-UE may determine activation or deactivation of the C-SCell from a plurality of cells configured by the base station.

The C-UE may determine activation or deactivation of the C-SCell based on a C-SCell activation/deactivation determination rule among a plurality of configured cells. The C-SCell activation/deactivation determination rule, a C-SCell activation determination rule, a C-SCell activation condition, a C-SCell deactivation determination rule and a C-SCell deactivation determination condition may be interchangeably read.

The C-SCell activation/deactivation determination rule may be that the C-SCell is active at all times.

The C-SCell activation/deactivation determination rule may be based on information of the M-UE. The C-UE may determine activation or deactivation of the C-SCell based on the information of the M-UE. The C-UE may receive from the M-UE a report from the M-UE. The report may be at least one of a measurement result (at least one of an RSSI, an RSRP, an RSRQ and an SINR), a BSR, a UE type, a UE category and UE capability. The C-SCell activation/deactivation determination rule may be one of following conditions, or may be a combination of a plurality of the following conditions.
- A measurement result of the C-SCell. For example, when the measurement result of the C-SCell exceeds a threshold (X [dB] or X [dBm]), the C-SCell is activated and, when the measurement result of the C-SCell goes below a threshold (Y [dB] or Y [dBm]), the C-SCell is deactivated.
- A measurement result of the C-SCell and an elapsed time. For example, when the measurement result of the C-SCell exceeds the threshold (X [dB] or X [dBm]) and a specific time (Tx [ms]) passes, the C-SCell is activated and, when the measurement result of the C-SCell goes below the threshold (Y [dB] or Y [dBm]) and the specific time (Ty [ms]) passes, the C-SCell is deactivated.
- A buffer size of a BSR from the M-UE. For example, when the buffer size of the BSR from the M-UE is a threshold M or more, the C-SCell is activated and, when the buffer size is less than the threshold M, the C-SCell is deactivated. That the buffer size is the threshold M or more may mean that a buffer size level or an index associated with the buffer size level is N or more.
- A service type or a service priority used by the M-UE. When, for example, the M-UE needs communication of a specific service type or a specific service priority, the C-SCell is activated.
- A band, a band combination or an FR that is configurable to the M-UE. The C-UE may determine activation or deactivation of the C-SCell based on the band, the band combination or the FR that is configurable to the M-UE. When, for example, a C cell other than the C-PCell is in the band, the band combination or the FR that is configurable to the M-UE, the C-SCell is activated. The band, the band combination or the FR that is configurable to the M-UE may be associated with a UE type, a UE category or UE capability of the M-UE.
- UE Capability of the M-UE. The C-UE may determine activation or deactivation of the C-SCell based on the UE capability of the M-UE. The UE capability may be a maximum number of usable cells.
- A connection status of the M-UE. The C-UE may determine activation or deactivation of the C-SCell based on the connection status of the M-UE.
- A traffic of the M-UE. When, for example, there is the traffic of the C-SCell, the C-UE may not deactivate the C-SCell.

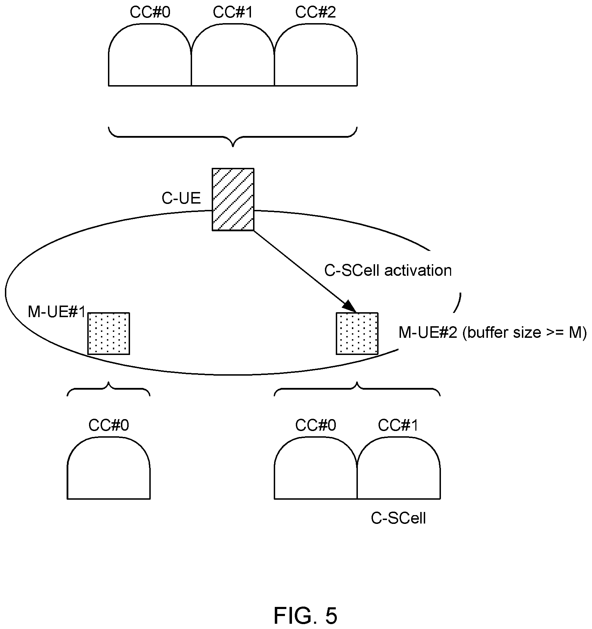

Fig. 5 is a diagram illustrating one example where the C-UE activates the C-SCell. In this example, a buffer size of a BFR from the M-UE #2 is M or more, and therefore the C-UE activates the C-SCell of the M-UE #2.

The C-SCell activation/deactivation determination rule may be based on information of at least one C cell of the C-PCell and the C-SCell. The C-UE may determine activation or deactivation of the C-SCell based on the information of the at least one C cell. The C-SCell activation/deactivation determination rule may be one of following conditions, or may be a combination of a plurality of the following conditions.
- The number of PRBs of a cell. For example, the number of PRBs of the cell is equal to or more than a threshold or less than the threshold.
- An uplink/downlink TDD configuration (e.g., TDD-UL-DL-Config) of a cell. For example, a UL duration or a DL duration (a slot, a symbol or a ratio) of the cell is equal to or more than a threshold or less than the threshold.
- A service type or a service priority supported by a cell. For example, the cell supports a specific service type or service priority.
- A cell usage rate. For example, a cell usage rate is equal to or more than a threshold or less than the threshold.
- The number of connected M-UEs. For example, when the number of connected M-UEs is the threshold K or more, the C-SCell is activated and, when the number of connected M-UEs is less than the threshold K, the C-SCell is deactivated.

The C-SCell activation/deactivation determination rule may be that, after a specific time passes since activation of the C-SCell, the C-SCell is deactivated. In this case, specific exceptional processing may be applied. The specific exceptional processing may refer to controlling an operation related to at least one of the above specific time and deactivation based on, for example, a buffer size.

The C-SCell activation/deactivation determination rule may be at least one of a configuration and an indication from the base station.

The C-SCell activation/deactivation determination rule may be determined by one of following methods, or may be determined by a combination of a plurality of the following methods.
- The C-SCell activation/deactivation determination rule is defined in the specification.
- The C-SCell activation/deactivation determination rule is configured or indicated by at least one of PHY, MAC and RRC signalings from the base station.
- The C-SCell activation/deactivation determination rule is determined (switched) based on a specific rule.
- The C-SCell activation/deactivation determination rule depends on a UE implementation.

The C-SCell activation/deactivation determination rule may be at least one of a configuration and an indication from the base station.

At least one parameter of the parameters X, Y, Tx, Ty, N, M and K may be determined by one of following methods, or may be determined by a combination of a plurality of the following methods.
- The parameters are defined in a specification.
- The parameters are configured or indicated by at least one of PHY, MAC and RRC signalings from the base station.
- The parameters are determined (switched) based on a specific rule.
- The parameters depend on a UE implementation.

### <M-UE to Which Cell Is Configured>

The same C cell configuration may be applied to all M-UEs that communicate with the C-UE.

For example, the C-UE or the base station may configure the same C cell to all M-UEs by an M-UE-common signaling. The M-UE-common signaling may be a control channel or a data (shared) channel that can be decoded by all M-UEs.

For example, the C-UE or the base station may configure the same C cell to all M-UEs by an M-UE-specific signaling.

The C cell may be configured per M-UE.

For example, the C-UE or the base station may configure the C cell per M-UE by the M-UE-specific signaling.

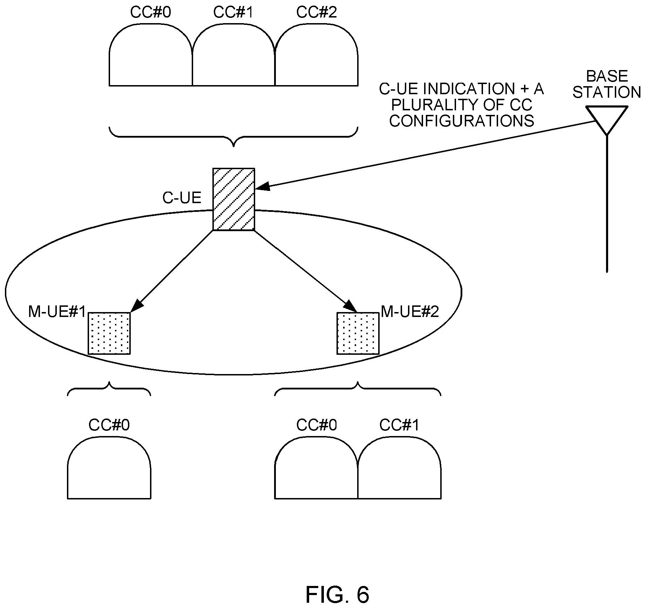

Fig. 6 is a diagram illustrating one example of a cell configuration per M-UE. In this example, the C-UE configures the CC #0 to the M-UE #1, and configures CCs #0 and #1 to the M-UE #2.

Different C cells may be applied between a plurality of M-UEs. The C-PCell may be the same between a plurality of M-UEs. All C cells may be different between a plurality of M-UEs.

According to this aspect, the operation of the C-UE that uses a plurality of cells becomes clear, it is possible to reserve C-UE performance, and it is possible to improve resource use efficiency.

### (Radio Communication System)

The configuration of the radio communication system according to one embodiment of the present disclosure will be described below. This radio communication system uses one or a combination of the radio communication method according to each of the above embodiment of the present disclosure to perform communication.

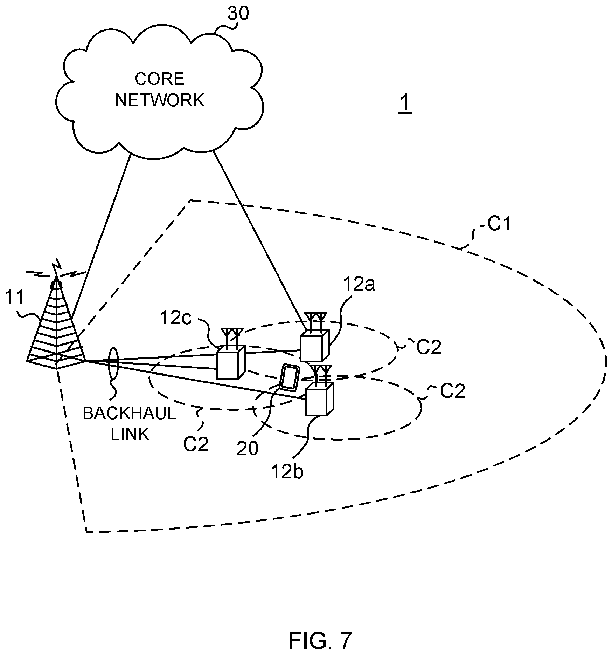

Fig. 7 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

In addition, base stations 11 and 12a to 12c may be operated by respectively different business operators. Alternatively, the base station 11 and the base station 12a may be operated by the same business operator, and the base stations 12b and 12c may be operated by different business operators. Furthermore, the base station 11 may operate a license NW, and the base stations 12a to 12c may each operate a local NW.

Furthermore, the radio communication system 1 may support dual connectivity between a plurality of Radio Access Technologies (RATs) (Multi-RAT Dual Connectivity (MR-DC)). MR-DC may include dual connectivity (E-UTRA-NR Dual Connectivity (EN-DC)) of LTE (Evolved Universal Terrestrial Radio Access (E-UTRA)) and NR, and dual connectivity (NR-E-UTRA Dual Connectivity (NE-DC)) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NR-NR Dual Connectivity (NN-DC)) where both of the MN and the SN are base stations (gNBs) according to NR).

The radio communication system 1 may include the base station 11 that forms a macro cell C1 of a relatively wide coverage, and the base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 7. The base stations 11 and 12 will be collectively referred to as a base station 10 below when not distinguished.

The user terminal 20 may connect with at least one of a plurality of base stations 10. The user terminal 20 may use at least one of Carrier Aggregation (CA) and Dual Connectivity (DC) that use a plurality of Component Carriers (CCs).

Each CC may be included in at least one of a first frequency range (Frequency Range 1 (FR 1)) and a second frequency range (Frequency Range 2 (FR 2)). The macro cell C1 may be included in the FR 1, and the small cell C2 may be included in the FR 2. For example, the FR 1 may be a frequency range equal to or less than 6 GHz (sub-6 GHz), and the FR 2 may be a frequency range higher than 24 GHz (above-24 GHz). In addition, the frequency ranges and definitions of the FR 1 and the FR 2 are not limited to these, and, for example, the FR 1 may correspond to a frequency range higher than the FR 2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as a backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the other base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (Physical Downlink Shared Channel (PDSCH)) shared by each user terminal 20, a broadcast channel (Physical Broadcast Channel (PBCH)) and a downlink control channel (Physical Downlink Control Channel (PDCCH)) as downlink channels.

Furthermore, the radio communication system 1 may use an uplink shared channel (Physical Uplink Shared Channel (PUSCH)) shared by each user terminal 20, an uplink control channel (Physical Uplink Control Channel (PUCCH)) and a random access channel (Physical Random Access Channel (PRACH)) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as, for example, a DL assignment or DL DCI, and DCI for scheduling the PUSCH may be referred to as, for example, a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a given search space based on a search space configuration.

One search space may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Uplink Control Information (UCI) including at least one of Channel State Information (CSI), transmission acknowledgement information (that may be referred to as, for example, Hybrid Automatic Repeat reQuest ACKnowledgement (HARQ-ACK) or ACK/NACK) and a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 may convey a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as, for example, an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

### (Base Station)

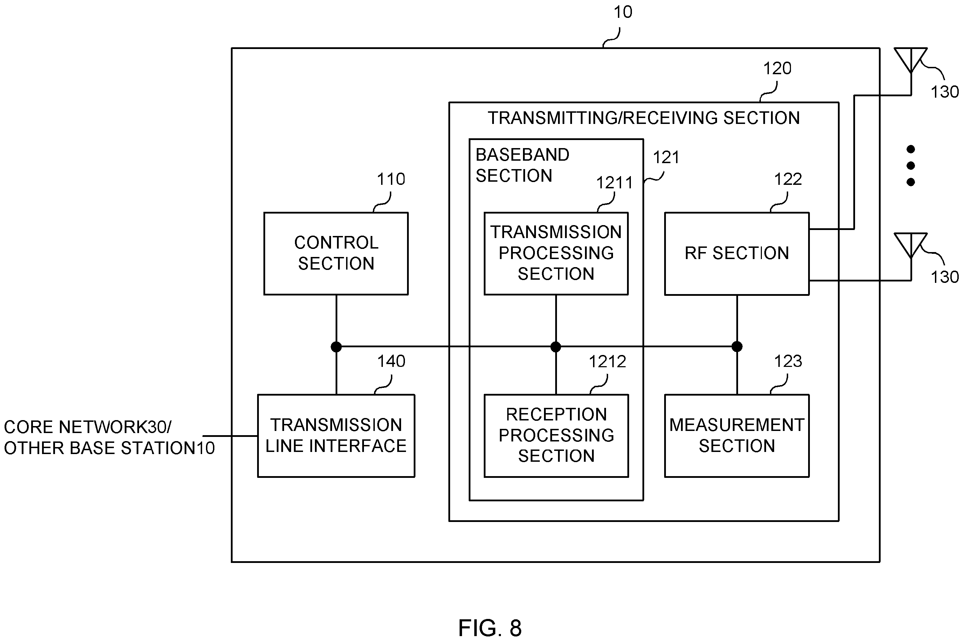

Fig. 8 is a diagram illustrating one example of a configuration of the base station according to the one embodiment. The base station 10 includes a control section 110, a transmission/reception section 120, transmission/reception antennas 130 and a transmission line interface 140. In addition, the base station 10 may include one or more of each of the control sections 110, the transmission/reception sections 120, the transmission/reception antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmission/reception section 120, the transmission/reception antennas 130 and the transmission line interface 140. The control section 110 may generate data, control information or a sequence to be transmitted as a signal, and forward the signal to the transmission/reception section 120. The control section 110 may perform call processing (such as configuration and release) of a communication channel, state management of the base station 10 and radio resource management.

The transmission/reception section 120 may include a baseband section 121, a Radio Frequency (RF) section 122 and a measurement section 123. The baseband section 121 may include a transmission processing section 1211 and a reception processing section 1212. The transmission/reception section 120 can be composed of a transmitter/receiver, an RF circuit, a baseband circuit, a filter, a phase shifter, a measurement circuit and a transmission/reception circuit described based on the common knowledge in the technical field according to the present disclosure.

The transmission/reception section 120 may be composed as an integrated transmission/reception section, or may be composed of a transmission section and a reception section. The transmission section may be composed of the transmission processing section 1211 and the RF section 122. The reception section may be composed of the reception processing section 1212, the RF section 122 and the measurement section 123.

The transmission/reception antenna 130 can be composed of an antenna such as an array antenna described based on the common knowledge in the technical field according to the present disclosure.

The transmission/reception section 120 may transmit the above-described downlink channel, synchronization signal and downlink reference signal. The transmission/reception section 120 may receive the above-described uplink channel and uplink reference signal.

The transmission/reception section 120 may form at least one of a transmission beam and a reception beam by using digital beam forming (e.g., precoding) or analog beam forming (e.g., phase rotation).

The transmission/reception section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmission/reception section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmission/reception section 120 (RF section 122) may modulate the baseband signal into a radio frequency range, perform filter processing and amplification on the signal, and transmit the signal of the radio frequency range via the transmission/reception antennas 130.

On the other hand, the transmission/reception section 120 (RF section 122) may perform amplification and filter processing on the signal of the radio frequency range received by the transmission/reception antennas 130, and demodulate the signal into a baseband signal.

The transmission/reception section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmission/reception section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmission section and the reception section of the base station 10 according to the present disclosure may be composed of at least one of the transmission/reception section 120, the transmission/reception antenna 130 and the transmission line interface 140.

In addition, the transmission/reception section 120 performs at least one of reception of a signal transmitted from a UE (C-UE) that has a base station function, and transmission of a signal to the C-UE.

The control section 110 may control activation or deactivation of the base station function for the UE (C-UE) that has the base station function.

### (User Terminal)

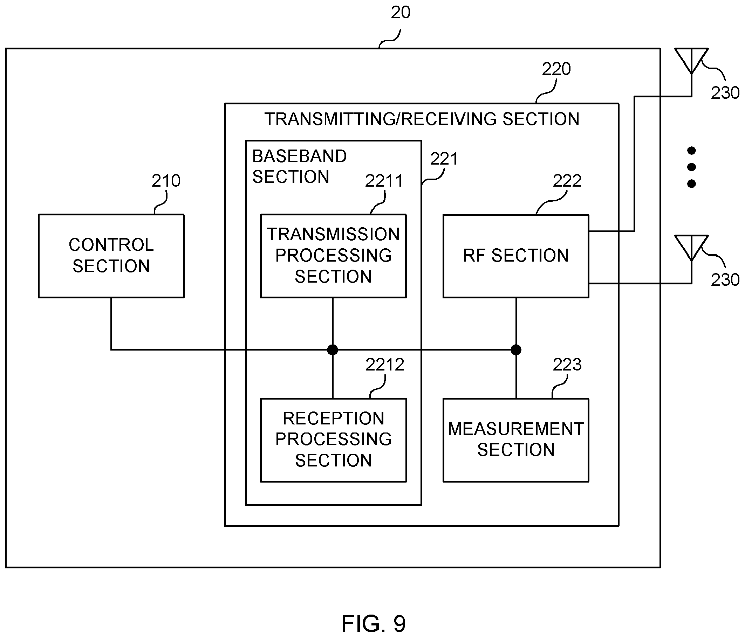

Fig. 9 is a diagram illustrating one example of a configuration of the user terminal according to the one embodiment. The user terminal 20 includes a control section 210, a transmission/reception section 220 and transmission/reception antennas 230. In this regard, the user terminal 20 may include one or more of each of the control sections 210, the transmission/reception sections 220 and the transmission/reception antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmission/reception section 220 and the transmission/reception antennas 230. The control section 210 may generate data, control information or a sequence to be transmitted as a signal, and forward the signal to the transmission/reception section 220.

The transmission/reception section 220 may include a baseband section 221, an RF section 222 and a measurement section 223. The baseband section 221 may include a transmission processing section 2211 and a reception processing section 2212. The transmission/reception section 220 can be composed of a transmitter/receiver, an RF circuit, a baseband circuit, a filter, a phase shifter, a measurement circuit and a transmission/reception circuit described based on the common knowledge in the technical field according to the present disclosure.

The transmission/reception section 220 may be composed as an integrated transmission/reception section, or may be composed of a transmission section and a reception section. The transmission section may be composed of the transmission processing section 2211 and the RF section 222. The reception section may be composed of the reception processing section 2212, the RF section 222 and the measurement section 223.

The transmission/reception antenna 230 can be composed of an antenna such as an array antenna described based on the common knowledge in the technical field according to the present disclosure.

The transmission/reception section 220 may receive the above-described downlink channel, synchronization signal and downlink reference signal. The transmission/reception section 220 may transmit the above-described uplink channel and uplink reference signal.

The transmission/reception section 220 may form at least one of a transmission beam and a reception beam by using digital beam forming (e.g., precoding) or analog beam forming (e.g., phase rotation).

The transmission/reception section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmission/reception section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a given channel (e.g., PUSCH), the transmission/reception section 220 (transmission processing section 2211) may perform the DFT processing as the above transmission processing to transmit the given channel by using a DFT-s-OFDM waveform. When precoding is not enabled, the transmission/reception section 220 (transmission processing section 2211) may not perform the DFT processing as the above transmission processing.

The transmission/reception section 220 (RF section 222) may modulate the baseband signal into a radio frequency range, perform filter processing and amplification on the signal, and transmit the signal of the radio frequency range via the transmission/reception antennas 230.

On the other hand, the transmission/reception section 220 (RF section 222) may perform amplification and filter processing on the signal of the radio frequency range received by the transmission/reception antennas 230, and demodulate the signal into a baseband signal.

The transmission/reception section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmission/reception section 220 (measurement section 223) may perform measurement related to the received signal. For example, the measurement section 223 may perform, for example, RRM measurement or CSI measurement based on the received signal. The measurement section 223 may measure, for example, received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmission section and the reception section of the user terminal 20 according to the present disclosure may be configured as at least one of the transmission/reception section 220 and the transmission/reception antennas 230.

The at least one user terminal 20 may function as a C-UE. In this case, the user terminal that functions as the C-UE may control communication with another user terminal by applying a specific base station function. Furthermore, the user terminal that functions as the C-UE may include at least part of the components of the base station 10.

The transmission/reception section 220 may receive from a base station a notification for using a plurality of cells for the terminal. The control section 210 may communicate with at least one terminal by using at least one cell of a plurality of these cells based on the notification.

The control section 210 may notify the at least one terminal of a first cell to which a specific signal is transmitted among the at least one cell.

The control section 210 may determine the first cell from a plurality of these cells based on at least one of information related to a plurality of these cells, information related to the at least one terminal and information from the base station.

The control section 210 may determine activation or deactivation of a second cell other than the first cell among a plurality of these cells based on at least one of the information related to a plurality of these cells, the information related to the at least one terminal and the information from the base station.

When the at least one terminal is a plurality of terminals, the control section 210 may communicate with a plurality of these terminals by using a same or different cell.

### (Hardware Configuration)

In addition, the block diagrams used to describe the above embodiment illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as, for example, a transmitting unit or a transmitter. As described above, the method for realizing each function block is not limited in particular.

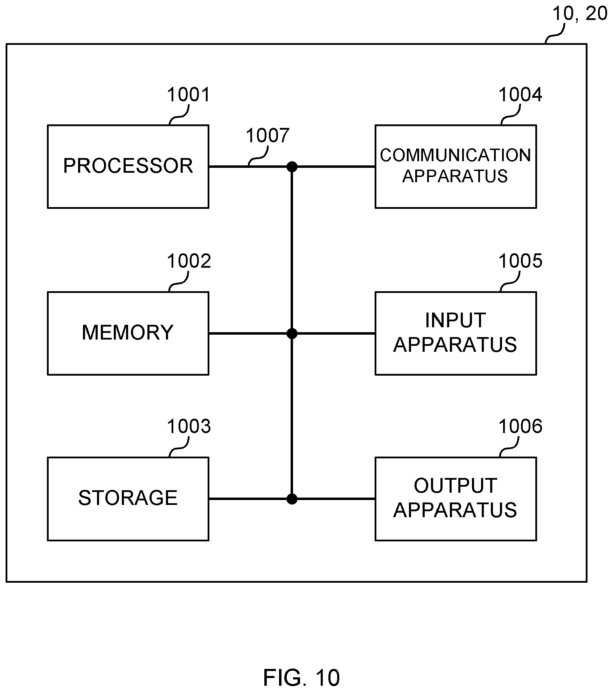

For example, the base station and the user terminal according to the one embodiment of the present disclosure may function as computers that perform processing of the radio communication method according to the present disclosure. Fig. 10 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 10 or may be configured without including part of the apparatuses.

For example, Fig. 10 illustrates the only one processor 1001. However, there may be a plurality of processors. Furthermore, processing may be executed by 1 processor or processing may be executed by 2 or more processors simultaneously or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmission/reception section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiment are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception section 120 (220) and transmission/reception antennas 130 (230) may be realized by the communication apparatus 1004. The transmission/reception section 120 (220) may be physically or logically separately implemented as a transmission section 120a (220a) and a reception section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

### (Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS, or may be referred to as a pilot or a pilot signal depending on standards to be applied. Furthermore, a Component Carrier (CC) may be referred to as, for example, a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a given signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as, for example, a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or code word, or may be a processing unit of scheduling or link adaptation. In addition, when the TTI is given, a time period (e.g., the number of symbols) in which a transport block, a code block or a code word is actually mapped may be shorter than the TTI.

In addition, in a case where 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe or a slot. A TTI shorter than the general TTI may be referred to as, for example, a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as, for example, a Physical Resource Block (Physical RB (PRB)), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as, for example, a partial bandwidth) may mean a subset of contiguous common Resource Blocks (common RBs) for a given numerology in a given carrier. In this regard, the common RB may be specified by an RB index that is based on a common reference point of the given carrier. A PRB may be defined based on a given BWP, and may be numbered within the given

### BWP.

The BWP may include a UL BWP (a BWP for UL) and a DL BWP (a BWP for DL). One or a plurality of BWPs in 1 carrier may be configured to the UE.

At least one of the configured BWPs may be active, and the UE may not assume to transmit and receive given signals/channels outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as the PUCCH and the PDCCH) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspect/embodiment described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (LI control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not performing notification of the given information or by performing notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI state)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "Base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (Remote Radio Head (RRH))). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (User Equipment (UE))" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmission apparatus, a reception apparatus or a radio communication apparatus. In addition, at least one of the base station and the mobile station may be, for example, a device mounted on a moving object or the moving object itself. The moving object may be a vehicle (e.g., a car or an airplane), may be a moving object (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), the Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

In a case where the words "include" and "including" and modifications of these words are used in the present disclosure, these words intend to be comprehensive similar to the word "comprising". Furthermore, the word "or" used in the present disclosure intends to not be an exclusive OR.

In a case where, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspect without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A radio communication apparatus comprising:
a reception section that receives from a base station a notification for using a plurality of cells for a terminal; and
a control section that communicates, based on the notification, with at least one terminal by using at least one cell of the plurality of cells.

2. The radio communication apparatus according to claim 1, wherein the control section notifies the at least one terminal of a first cell to which a specific signal is transmitted among the at least one cell.

3. The radio communication apparatus according to claim 2, wherein the control section determines the first cell from the plurality of cells based on at least one of information related to the plurality of cells, information related to the at least one terminal and information from the base station.

4. The radio communication apparatus according to claim 3, wherein the control section determines activation or deactivation of a second cell other than the first cell among the plurality of cells based on at least one of the information related to the plurality of cells, the information related to the at least one terminal and the information from the base station.

5. The radio communication apparatus according to any one of claims 1 to 4, wherein, when the at least one terminal is a plurality of terminals, the control section communicates with the plurality of terminals by using a same or different cell.

6. A radio communication method of a radio communication apparatus comprising:
receiving from a base station a notification for using a plurality of cells for a terminal; and
communicating, based on the notification, with at least one terminal by using at least one cell of the plurality of cells.
